# FASCICULE DE BREVET EUROPEEN

(11) **EP 0 400 244 B1**
(45) Date de publication et mention de la délivrance du brevet: **20.01.1993**
(21) Numéro de dépôt: 89401488.5
(22) Date de dépôt: 31.05.1989
(51) Int. Cl.: E04D 1/22, E04F 13/18, C04B 26/02

(54) **Perfectionnements aux éléments de couverture et à leurs procédés et dispositifs de fabrication**
Bedeckungselemente und Verfahren und Vorrichtungen für ihre Herstellung
Covering elements and processes and devices for manufacturing same

(43) Date de publication de la demande: 05.12.1990
(73) Titulaire: SOCIETE DES SCHISTES BLEUS DU COTENTIN, F-50700 Valognes (FR)
(72) Inventeur: Noury, Jean-Paul C.S.T.B., Champs sur Marne F-77421 Marne la Vallée (FR); Royer, Sylvie Andréa, Huberville F-50700 Valognes (FR); Lejemmetel, Pierre Marie, F-50440 Omonville la Petite (FR); Lemperière, Jean-Pierre, F-50460 Querqueville (FR)
(74) Mandataire: Behaghel, Pierre

(56) Documents cités:
- EP-A- 0 187 688
- FR-A- 2 484 503
- GB-A- 2 041 959
- GB-A- 2 164 340
- GB-A- 2 200 931
- US-A- 1 672 293

## Description

L'invention est relative aux éléments de couverture destinés à la constitution de toitures ou bardages.

Elle vise également les procédés et dispositifs de fabrication de ces éléments de couverture.

Il est connu de réaliser des couvertures à l'aide de pierres plates ou "lauzes" constituées en schiste.

Ces pierres présentent un aspect extérieur rugueux et lustré avec un coloris bleu-vert pâle et sont très appréciées dans certaines régions comprenant des carrières d'où elles peuvent être extraites.

Mais elles présentent certains inconvénients et, en particulier, les suivants :
- elles sont lourdes, ce qui rend pénible leur manutention et exige des charpentes de support robustes,
- de plus, et surtout, elles sont plus coûteuses que les autres éléments de couverture disponibles sur le marché et l'on a dû progressivement fermer les carrières où elles étaient produites : il est donc difficile à ce jour de réparer ou restaurer les couvertures réalisées à l'aide de ces lauzes et il n'est plus guère question d'en réaliser de nouvelles.

Pour remédier à ce genre d'inconvénient également rencontré dans le domaine des ardoises, qui sont comme les lauzes des éléments plats schisteux de couverture, mais plus minces, il a déjà été proposé par le brevet LU-A-84 663 de remplacer ces ardoises par des produits artificiels minces et plats obtenus par moulage d'un mortier comprenant des déchets schisteux mélangés avec une résine.

Mais le mortier en question comprenait en outre une forte proportion de sable et de craie, ce qui présentait un certain nombre d'inconvénients (effet visuel, tenue mécanique...). Le document GB-A-2041959 décrit un élément plat de couverture, obtenu par moulage à partir d'un mortier comprenant des déchets schisteux mélangés à une résine. Les dimensions, le pourcentage pondéral résine/schistes et la longueur des paillettes schisteuses sont du même ordre que l'objet de l'invention. Aucune indication n'est donnée sur la composition pondérale du mélange de particules schisteuses.

Les éléments plats de couverture selon l'invention remédient à ces inconvénients.

A cet effet, ces éléments plats selon l'invention présentent encore extérieurement le même aspect qu'un produit naturel schisteux avec chacune de leur deux grandes dimensions supérieure ou égale à 10 cm, ils sont encore obtenus par moulage d'un mortier comprenant des déchets schisteux mélangés avec une résine et ils sont essentiellement caractérisés en ce que leur épaisseur moyenne est comprise entre 4 et 15 mm et en ce que le pourcentage pondéral de la résine dans le mortier est compris entre 8 et 20 %, le restant étant constitué par un mélange de particules schisteuses comprenant lui-même 15 à 35 % en poids de paillettes présentant des longueurs comprises entre 2 et 4 mm, 20 à 40 % de tout-venant présentant une granulométrie de 1 à 2 mm et 10 à 40 % de fines présentant une granulométrie inférieure à 1 mm.

On peut ajouter en outre au mortier, en fonction des besoins, un pourcentage pondéral d'un pigment bleu compris entre 0,01 et 1 % et/ou un pourcentage pondéral d'alumine compris entre 5 et 25 %.

Les procédés de fabrication desdits éléments de couverture selon l'invention sont essentiellement caractérisés en ce que l'on introduit le mortier tel que défini ci-dessus dans des moules dont le fond et les parois latérales réalisés par contre-moulage de lauzes naturelles, après avoir notamment enduit les fonds de ces moules d'un produit de démoulage approprié et en ce que l'on effectue la polymérisation par chauffage à une température comprise entre 20 et 150°C, de préférence entre 60 et 150°C, pendant une durée comprise entre quelques minutes et quelques heures, de préférence de l'ordre de 15 à 30 minutes.

Quant aux dispositifs de fabrication des éléments de couverture considérés selon l'invention, ils sont essentiellement caractérisés par des moules, notamment en élastomère, dont les fonds et les parois latérales sont réalisés par contre-moulage de lauzes naturelles.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

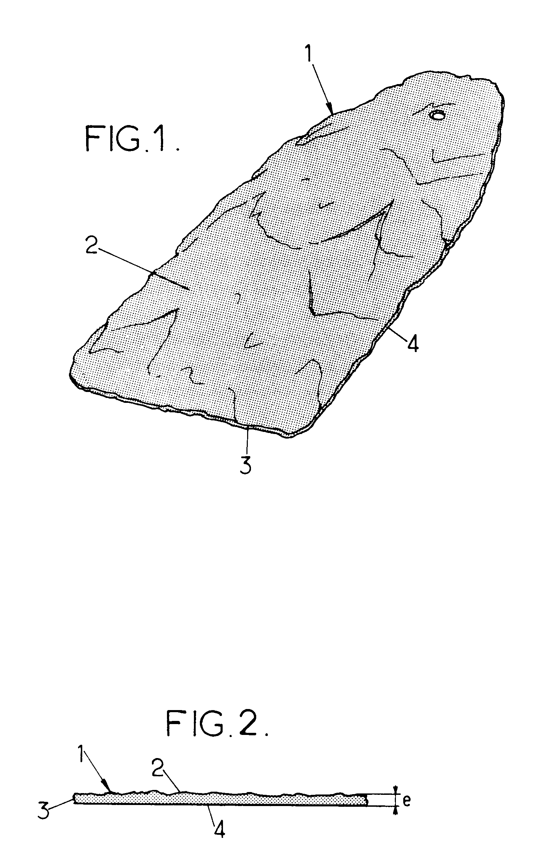

Les figures 1 et 2, de ce dessin, montrent respectivement en vue perspective et en vue de côté un élément de couverture réalisé conformément à l'invention.

Cet élément, désigné par la référence 1 sur le dessin, se présente sous la forme d'une pièce plate du genre des tuiles, c'est-a-dire dont les deux dimensions principales sont supérieures à 10 cm : chaque face plate de l'élément 1 est par exemple délimitée par un rectangle dont les dimensions, exprimées en cm, peuvent être de 10 x 15 pour les plus petits éléments et de 40 x 80 pour les plus grands, ou encore par un trapèze, ou même par une figure géométrique dont un côté est incurvé et bombé vers l'extérieur de façon à former une "écaille".

L'une des faces 2 ou face supérieure, de l'élément 1, ainsi que ses tranches 3, présentent extérieurement l'aspect rugueux et lustré d'une lauze naturelle en schiste ainsi que sa teinte bleu-vert pâle.

En revanche, la face inférieure 4 de l'élément 1 est lisse et plane et l'épaisseur e de cet élément est plus petite que celle des lauzes naturelles, étant comprise entre 4 et 15 et plus généralement de l'ordre de 7 à 12 mm, alors que l'épaisseur des lauzes naturelles est généralement supérieure à 20 mm.

L'épaisseur de chaque élément peut être constante sur toute son étendue, mais elle peut être également variable de façon continue ou discontinue le long dudit élément.

Cet élément est obtenu par moulage.

A cet effet, on prépare un mortier composé par une résine polymérisable et par une charge minérale elle-même constituée par un mélange de particules schisteuses.

La résine est de préférence une résine polyester thermodurcissable à forte teneur en monomère styrène.

Il s'agit par exemple de celle vendue sous l'appellation Stratyl 116 ou Norsodyne 2010 V par la Société CHARBONNAGES DE FRANCE-Chimie.

La proportion pondérale de cette résine dans le mortier est comprise entre 8 et 20 %.

La charge minérale est composée de particules schisteuses généralement disponibles sous la forme de déchets de schistes concassés.

Elle comprend trois familles de particules, savoir :
- des paillettes, dont la longueur est comprise généralement entre 2 et 4 mm et qui assurent la tenue mécanique de l'élément moulé, paillettes dont le pourcentage pondéral dans l'ensemble du mortier est compris entre 15 et 25 %,
- le tout-venant, dont la granulométrie est généralement comprise entre 1 et 2 mm et dont la proportion pondérale est comprise entre 20 et 40 %,
- et les fines, de granulométrie inférieure aux particules de la famille précédente et dont la proportion pondérale est comprise entre 10 et 40 %.

On ajoute en outre de préférence au mélange un accélérateur et/ou un catalyseur susceptibles de favoriser la polymérisation de la résine, dans une proportion pondérale comprise entre 0,1 et 1 % du tout.

Il peut être avantageux en outre d'ajouter à l'ensemble, avant moulage :
- un pigment bleu ou bleuté dans une proportion pondérale de 0,01 à 1 % en vue d'accentuer le coloris bleu de l'élément moulé définitif qui serait naturellement trop orienté vers le vert,
- et un composant ignifuge tel que l'alumine hydratée sèche, dans une proportion pondérale comprise entre 5 et 25 %, lorsque l'élément moulé doit présenter une tenue au feu élevée.

Pour réaliser un élément de couverture à l'aide d'un mortier tel que défini ci-dessus, on a recours à des moules dont les fonds et les parois latérales sont réalisés par contre-moulage de lauze naturelle de façon à présenter chacune en négatif le relief de la face supérieure et des tranches d'une telle lauze.

Les moules en question sont avantageusement formés en élastomère de façon à faciliter les démoulages malgré le fait que les parois latérales des moules ne soient pas totalement lisses.

Avant de placer le mélange à mouler dans les moules, on enduit les fonds de ceux-ci par un produit de démoulage approprié.

Le durcissement de l'élément en cours de fabrication, qui fait appel à la polymérisation de la résine thermodurcissable, est obtenu par un chauffage de l'ensemble à une température suffisante pour que l'élément ne demeure pas seulement gélifié, ce qui rendrait difficile le démoulage, et pourtant suffisamment basse pour éviter la formation en surface de brûlages, de marbrures et de micro-cavités.

Une telle température est comprise entre 20 et 150°C, et plus généralement entre 60 et 150°C, la durée du chauffage étant elle-même comprise entre quelques minutes et quelques heures, et de préférence entre 15 et 30 minutes.

L'élément 1 obtenu après démoulage est une lauze de synthèse susceptible d'être utilisée comme élément de couverture.

Cette lauze de synthèse présente de nombreux avantages par rapport aux lauzes naturelles, avantages tels que les suivants :
- la grande légèreté : le poids de la lauze de synthèse ici proposée est de l'ordre de 40 kg/m2 alors que celui des lauzes naturelles est de l'ordre de 80 à 100 kg/m2 ; cet avantage est très important dans la pratique en ce qu'il simplifie les manutentions et en ce qu il réduit les exigences de robustesse des charpentes de support,
- le faible prix de revient : la fabrication proposée permet en effet d'utiliser des déchets ou résidus de carrières, ce qui rend à nouveau possible l'exploitation de carrières où il ne serait plus possible d'extraire des éléments monoblocs de dimensions suffisantes pour réaliser des éléments de couverture.

Ces avantages sont obtenus sans que soient réduits en rien, bien au contraire, les différents avantages des lauzes naturelles tels que l'aspect extérieur, la tenue mécanique, l'imperméabilité, la longévité (notamment tenue au gel et au ultra-violets), la sonorité aux chocs, les possibilités de façonnage, la tenue au feu et plus généralement la conformité aux normes des éléments de couverture, notamment à la norme française P 32-301.

En suite de quoi, et quel que soit le mode de réalisation adopté, on dispose finalement d'éléments de couverture dont la constitution, la fabrication et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Elément plat de couverture présentant extérieurement le même aspect qu'un produit naturel schisteux et dont chacune des deux grandes dimensions est supérieure ou égale à 10 cm, obtenu par moulage d'un mortier comprenant des déchets schisteux mélangés avec une résine, son épaisseur moyenne étant comprise entre 4 et 15 mm et le pourcentage pondéral de la résine dans le mortier étant compris entre 8 et 20%, le restant étant constitué par un mélange de particules schisteuses comprenant lui-même 15 à 35% en poids de paillettes présentant des longueurs comprises entre 2 et 4 mm, 20 à 40% de tout-venant présentant une granulométrie de 1 à 2 mm, et 10 à 40% de fines présentant une granulométrie inférieure à 1 mm.

2. Elément de couverture selon la revendication 1, caractérisé en ce que le mortier comporte en outre un pourcentage pondéral d'un pigment bleu compris entre 0,01 et 1.

3. Elément de couverture selon l'une quelconque des revendications 1 et 2, caractérisé en ce que le mortier comprend en outre un pourcentage pondéral d'alumine compris entre 5 et 25.

4. Elément de couverture selon l'une quelconque des précédentes revendications, caractérisé en ce que sa face inférieure (4) est lisse.

5. Procédé pour fabriquer un élément de couverture selon l'une quelconque des précédentes revendications, caractérisé en ce que l'on introduit le mortier tel que défini ci-dessus dans des moules dont le fond et les parois latérales sont réalisés par contre-moulage de lauzes naturelles, après avoir notamment enduit les fonds de ces moules d'un produit de démoulage approprié et en ce que l'on effectue la polymérisation par chauffage à une température comprise entre 20 et 150°C, de préférence entre 60 et 150°C, pendant une durée comprise entre quelques minutes et quelques heures, de préférence de l'ordre de 15 à 30 minutes.

## Patentansprüche

1. Bedeckungselement, das äußerlich das gleiche Aussehen hat wie eine Platte aus natürlichem Schiefer, dessen Abmessung in den beiden Hauptrichtungen 10 cm oder mehr beträgt und das durch Verformung eines Mörtels hergestellt ist, der aus einem Gemisch aus schieferhaltigen Abfallprodukten und einem Kunstharz besteht, wobei die mittlere Stärke des Elementes zwischen 4 und 15 mm und der Anteil des Kunstharzes in dem Mörtel zwischen 8 und 20 Gew.-% liegt, während der Rest aus einem Gemisch von schieferhaltigen Teilchen besteht, das 15 bis 35 Gew.-% schuppenförmige Teilchen mit einer zwischen 2 und 4 mm liegenden Länge, 20 bis 40 % Hauptmasse mit einer zwischen 1 und 2 mm liegenden Korngröße und 10 bis 40 % Feingut mit einer unterhalb 1 mm liegenden Korngröße enthält.

2. Bedeckungselement nach Anspruch 1, dadurch gekennzeichnet, daß der Mörtel darüber hinaus einen blauen Farbstoff in einer Menge von 0,01 bis 1 Gew.-% enthält.

3. Bedeckungselement nach den Ansprüchen 1 oder 2, dadurch gekennzeichnet, daß der Mörtel ferner Tonerde in einer zwischen 5 und 25 Gew.-% liegenden Menge enthält.

4. Bedeckungselement nach einem der vorhergehenden Ansprüche, dadurch gekennzeichnet, daß seine Unterseite (4) glatt ist.

5. Verfahren zur Herstellung eines Bedeckungselementes nach einem der vorhergehenden Ansprüche, dadurch gekennzeichnet, daß man den oben beschriebenen Mörtel in Formen eingibt, deren Böden und Seitenwände durch Eindrücken einer Natursteinplatte gebildet sind, insbesondere nachdem man die Böden der Formen mit einem geeigneten Entformungsmittel behandelt hat und daß die Polymerisation durch Erwärmung auf eine zwischen 20 und 150°, vorzugsweise zwischen 60 und 150° liegende Temperatur während einer Dauer vorgenommen wird, die zwischen einigen Minuten und einigen Stunden, vorzugsweise zwischen 15 und 30 Minuten liegt.

## Claims

1. Flat covering element having externally the same appearance as a natural schistous product and on which each of the two large dimensions is equal to or greater than 10 cm, obtained by moulding a mortar comprising schistous wasta mixed uith a resin, its mean thickness being between 4 and 15 mm and the proportion by weight of the resin in the mortar being between 8 and 20%, the remainder consisting of a mixture of schistous particles itself comprising 15 to 35% by weight of flakes having lengths of between 2 and 4 mm, 20 to 40% of the ungraded product having a particle size of 1 to 2 mm, and 10 to 40% of fines having a particle size of less than 1 mm.

2. Covering element according to claim 1, characterised in that the mortar also comprises a proportion by weight of a blue pigment of between 0.01 and 1%.

3. Covering element accoerding to either one of Claims 1 or 2, characterised in that the mortar also comprises a proportion by weight of alumina of between 5 and 25%.

4. Covering element according to any one of the preceding claims, characterised in that its bottom face (4) is smooth.

5. Method for manufacturing a covering element according to any one of the preceding claims, characterised in that the mortar as defined above is introduced into moulds, the base and aide walls of uhich are produced by the counter-moulding of natural roofing stones after notably coating the bottoms of these moulds with a suitable parting product, and in that polymerisation is carried out by heating to a temperature of between 20 and 150°C, preferably between 60 and 150°C, for a period of a few minutes to a few hours, preferably of the order of 15 to 30 minutes.
